# EUROPEAN PATENT SPECIFICATION

(11) **EP 2 153 614 B1**
(45) Date of publication and mention of the grant of the patent: **13.07.2011**
(21) Application number: 08753757.7
(22) Date of filing: 07.05.2008
(51) Int. Cl.: H04L 29/06, G08B 25/00, H04N 7/18

(54) **SYSTEM AND METHOD FOR EXCHANGING DATA BETWEEN A FIRST DATA PROCESSING SYSTEM AND A SECOND DATA PROCESSING SYSTEM VIA AN AT LEAST PARTLY PUBLIC COMMUNICATION NETWORK**
SYSTEM FÜR DEN DATENAUSTAUSCH ZWISCHEN EINEM ERSTEN DATENVERARBEITUNGSSYSTEM UND EINEM ZWEITEN DATENVERARBEITUNGSSYSTEM ÜBER EIN ZUMINDEST TEILWEISE ÖFFENTLICHES KOMMUNIKATIONSNETZ
SYSTÈME ET PROCÉDÉ POUR ÉCHANGER DES DONNÉES ENTRE UN PREMIER SYSTÈME DE TRAITEMENT DE DONNÉES ET UN SECOND SYSTÈME DE TRAITEMENT DE DONNÉES PAR L'INTERMÉDIAIRE D'UN RÉSEAU DE COMMUNICATION AU MOINS PARTIELLEMENT PUBLIC

(30) Priority: 07.05.2007 NL 2000632
(43) Date of publication of application: 17.02.2010
(73) Proprietor: Spectator Intellectual Properties B.V., 4931 BM Geertruidenberg (NL)
(72) Inventor: KLOONEN, Marinus, Adrianus, Hendrikus, NL-4907 PA Oosterhout (NL); VAN DEN HOEK, Rolf, Martijn, NL-3312 LA Dordrecht (NL); ERMSTRANG, Gerrit, Gijsbert, NL-4283 HE Giessen (NL); VAN DE WATER, Godefridus, Johannes, NL-5253 AJ Nieuwkuijk (NL); HERMES, Hubertus, Franciscus, Maria, NL-6135 HS Sittard (NL)
(74) Representative: van Oeffelt, Abraham
(86) International application number: PCT/NL2008/050274
(87) International publication number: WO 2008/136674

(56) References cited:
- WO-A-98/51080
- GB-A- 2 416 897
- US-A1- 2003 061 325
- US-A1- 2006 031 934
- US-A1- 2006 139 162
- TECTON LIMITED: "High Performance IP solutions - Network Toolkit"[Online] 10 May 2006 (2006-05-10), pages 1-2, XP002466655 Retrieved from the Internet: URL:http://tecton-cctv.com/pdfs/Network%20 Toolkit%20CCTV.pdf> [retrieved on 2008-01-28]
- JEFFREY MENOHER: "Owl Products Help Manage Medical Information Security in Compliance with HIPAA Regulations", INTERNET CITATION, 21 June 2006 (2006-06-21), pages 1-15, XP007913492, Retrieved from the Internet: URL:http://www.owlcti.com/pdfs/whitepapers /Product_App_Medical_Info.pdf [retrieved on 2010-06-17]
- JEFFREY MENOHER: "Owl Products Help Manage Medical Information Security in Compliance with HIPAA Regulations", INTERNET CITATION, 21 June 2006 (2006-06-21), pages 1-15, XP007913492, Retrieved from the Internet: URL:http://www.owlcti.com/pdfs/whitepapers /Product_App_Medical_Info.pdf [retrieved on 2010-06-17]

## Description

The present invention relates to a device and method for exchanging data between a first data processing system and a second data processing system via a communication network at least partly accessible to the public. The present invention relates particularly to a system for surveillance of a first location from a second location, making use of such a device.

When data is transmitted from a first data processing system to a second data processing system via a communication network at least partly accessible to the public, such as the internet, use is made of communication protocols, usually the internet protocol or a similar protocol. In addition to having various advantages, these protocols have the drawback that persons with malicious intent, who have access to the relevant communication network at least partly accessible to the public, can gain access (also referred to as "hacking") to data processing systems linked to the communication network in relatively simple manner via such a communication protocol when they see an opportunity to present themselves as a trusted party somewhere on the communication network. This is often possible because they make skilful use of software errors, user errors and/or setting errors of for instance firewalls, routers or applications linked to the communication network at least partly accessible to the public.

Known security techniques, such as firewalls, which are generally implemented as software solutions, can still be bypassed and thus form a security risk. The functioning of the data processing systems linked to the communication network at least partly accessible to the public, and the other systems coupled via these systems, can thus be accessed. The security of the data cannot therefore be guaranteed.

Two fields of application where this is considered particularly problematic are those of security and health care systems for, among other purposes, remote surveillance of a location or object or for communication with that location or that object.

In the case of a security system, such systems can obviate the necessity for the presence of a physical person at the location for surveillance, reduce the number of security personnel present, increase the sense of security of security staff present, and create the possibility of checking the existing security by providing means enabling remote surveillance of this location, often (commercial) premises such as a bank or a shop, for instance that of a jeweller.

A security system for instance comprises a sensor such as a door contact or a motion detector at a first location for the purpose of generating an alarm signal which is transmitted to a second location. This generally takes place via an optionally specifically assigned infrastructure, for instance PSTN or ISDN.

At the second location - a reporting centre, emergency centre or control room - the signal is converted into a signal discernible to a security guard, such as a visible, audible or tactile signal. The security guard at the second location can then decide which follow-up action should be taken. In some cases an alarm signal is also passed on to emergency services such as the police or a private security company.

A problem with a system as described above is however that a large part of the alarm signals generated by these systems is not triggered by the presence of a burglar at the location for surveillance, but by animals, weather conditions (such as a storm), wrongly adjusted or operated equipment, insufficient technical maintenance or other reasons, so that a false alarm is generated.

A result hereof is that emergency services no longer take action on the basis of an alarm signal, and that a private security company must be brought in, or an owner or manager of the location himself must him/herself carry out an inspection.

It is therefore becoming increasingly more usual to provide means for verifying the alarm signal, which enable an operator at the control room where the alarm signal comes in to determine the validity of the alarm signal. It may also be the case that a security guard at a control room must carry out an inspection at his/her own initiative - for instance at set times - separately of any alarm signal or, conversely, is already aware of the arrival of for instance a supplier at a point in time when the location is unmanned or unguarded. In order to enable surveillance of the location at that moment there are placed, in addition to possible sensors such as contacts and motion detectors, audiovisual recording means such as cameras with which an operator can form a more detailed image of the first location after receiving an alarm signal.

The said audiovisual recording means for verifying the alarm signal can form part of a closed-circuit television system which is usually implemented using a first data processing system adapted to communicate via a communication protocol, such as the internet protocol. In order to exchange data between the first location and the second location, and optionally also locations of emergency services, the data processing system at the first location can be linked via a communication connection with a data processing system at the second location, which is also adapted to communicate via the communication protocol in question, such as the internet protocol. The first data processing system and the second data processing system are usually linked via an at least partly public network, on which a communication protocol, for instance the internet protocol, is operated for reasons of simplicity of communication. It is further usual for the alarm signal itself to be transmitted via a different connection, such as the above mentioned dedicated telephone connection.

Data, for instance visual material recorded at a location for surveillance, are thus transmitted from a first data processing system at the location for surveillance to a second data processing system at the control room, and command data, for instance for operating recording means for generating the visual material, are transmitted from the second data processing system at the control room to the first data processing system at the first location. However, the danger of these data processing systems being hacked makes the use of a communication network at least partly accessible to the public less attractive without further protection against this hacking. In this case improper data exchange can take place with the data processing system and other systems linked to the data processing system.

This is because a person with malicious intent can gain access to all locations and devices linked to the communication network as soon as he/she has managed to gain access to one of the locations by means of hacking the data processing system associated with this location. By then posing as a regular user of the data processing system of the communication network which has been hacked, he/she is considered to be a trusted party on other communication networks linked to the data processing system, and can also gain access thereto in relatively simple manner.

With a data processing system it is possible to exchange not only data such as audio, video and control information, but also computer viruses, (spam) e-mail and data from malicious persons trying to hack into the communication network. These data are all transported indiscriminately over the same communication connection. In the known security systems the security against undesirable data exchange is handled by for instance a firewall or data encryption. When such solutions are based on software, the security can be bypassed by finding out a password, an encryption key or by making use of software errors.

"Owl Products Help Manage Medical Information Security in Compliance with HIPAA Regulations", JEFFREY MENOHER, Owl Computing Technologies, Inc. discloses secure one-way data transfer of medical data.

The Tecton Limited folder "High Performance IP solutions - Network Toolkit" describes a combination of two RS232 networks that are connected via an internet, a local area network of a company network. The data within the networks to be connected is thus in RS232 format, while the connection between both networks is in IP format.

The United States Patent Application US 2006/139162 describes in paragraphs [0024-0027] an "Axis"-streamer, converting RS 422 data to IP data in order to transmit this data. Furthermore, the use of camera's that can produce Ethernet-protocol-packages is mentioned. However, it does not describe the coupling of two IP networks via a data connection inaccessible to data traffic according to the internet protocol. Besides, protection of data is not described as a purpose in it at all.

It is therefore an object of the present invention to provide a method according to claim 8 and system according to claim 1 for exchanging data between a first data processing system and a second data processing system via a communication network at least partly accessible to the public which at least partially obviates the above stated drawbacks.

It is a further object of the present invention to provide a system for surveillance of a first location from a second location, wherein the first and the second location comprise a data processing system adapted to communicate according to a communication protocol making use of the above stated method.

The invention provides for this purpose a communication system for exchanging data, via a communication network at least partly accessible to the public, between a first communication network with at least one data processing system, for instance a computer or a security camera, and a second communication network with at least one data processing system, wherein both data processing systems are adapted to communicate according to a communication protocol, wherein the first data processing system is linked via a first coupling to the communication network at least partly accessible to the public and the second data processing system is linked via a second coupling to the communication network at least partly accessible to the public, wherein the invention is characterized in that at least one of the couplings comprises a data connection inaccessible to data traffic according to the communication protocol.

A communication network at least partly accessible to the public according to the present invention must also be understood to mean a private communication network or private communication connection which is publicly accessible for whatever reason or may be in any way susceptible to hacking, such as an IP-based fixed communication network such as the internet, intranet, extranet, LAN, WAN, VPN, HFC, cable or X-DSL, an IP-based wireless communication network, including GPRS, W-LAN, WIMAX, EDGE, UMTS or a satellite network, a GSM, GSMdata, HSCSD, ISDN or PSTN network.

A data processing system can comprise a computer, but also digital security cameras or other systems which are adapted to generate data which can be transported via an internet protocol or related protocol, or which are adapted to communicate via such a protocol. Such systems can be linked via an analog or digital interface to the communication network at least partly accessible to the public, wherein the communication protocol can comprise a network communication protocol, and can in particular comprise a protocol from the group of the internet protocol (IP), V.110, or X.75.

Owing to the coupling being inaccessible via the used communication protocol it is not possible for malicious persons to gain access, from the communication network at least partly accessible to the public, such as an IP-based fixed or wireless communication work, an ISDN or a PSTN communication network, by means of the used communication protocol to the data processing system linked to the coupling that is inaccessible via the applied communication protocol.

In order to enable communication via the coupling inaccessible to the used communication protocol, the data must be converted according to the used communication protocol to a data format such that the coupling can be accessed. The coupling inaccessible to the used communication protocol is provided for this purpose in an embodiment of the present invention with a protocol converter for converting data according to the used communication protocol into data suitable for transport via the coupling inaccessible to the used communication protocol, which coupling can for instance comprise a video connection, an audio connection or a data connection as according to the RS232 protocol. These connections can here take both an analog and a digital form.

In a further embodiment the present invention provides a communication system for surveillance of a first location, such as a (commercial) premises, from a second location using audiovisual recording means such as video cameras or microphones situated at the first location. These recording means are here linked to a first data processing system situated at the first location and are operated in accordance with a determined communication protocol. The system according to the present invention further comprises a control room situated at the second location for displaying the recorded data to an observer, for instance via a warning signal such as a light or a sound, or an indication on a monitor.

The recorded data can be generated by a video recording or reproducing system such as a camera, a DVS (digital video streamer), a DVR (digital video recorder) or a CCTV system, by an audio recording or reproducing system such as a microphone or a loudspeaker, by a data recording or reproducing system such as a motion or contact sensor, a breakage detector, a switch, a fire detector, a license plate or face recognition system, or a video motion detector.

Present between the first and the second data processing system is a communication connection, at least for exchanging recorded data generated by the recording means. In an embodiment of the present invention the alarm signal of the sensor is also exchanged via the communication connection. The communication connection comprises at least a coupling inaccessible to data traffic according to the used communication protocol.

Owing to the use of a coupling which is inaccessible according to the used communication protocol the system according to the present invention cannot exchange any unintended data, such as computer viruses, (spam) e-mail and data from malicious persons, from the communication network at least partly accessible to the public to the first or the second data processing system, or from the first data processing system to the second data processing system or vice versa, other than defined for this inaccessible coupling.

The communication system according to the present invention can be adapted for this purpose such that the first data processing system is coupled to recording means for providing recorded data from a first location, for instance a video camera or a microphone, and the first data processing system is adapted to transmit the recorded data according to the internet protocol to the second data processing system via the communication network, while the second data processing system is adapted to reproduce the recorded data to an observer at a second location. The first coupling between the first data processing system and the communication network at least partly accessible to the public can herein be inaccessible via for instance the internet protocol, and the second coupling between the second data processing system and the communication network at least partly accessible to the public can be inaccessible via for instance the internet protocol, wherein both the first and the second data processing system can comprise one or more data processing systems.

The second data processing system can be further adapted to receive commands from the observer and to convert the received commands into command data according to the internet protocol. The second data processing system is here then adapted to transmit command data according to the internet protocol to the first data processing system, which is adapted to receive the command data and to forward the command data to a device which is coupled to the first data processing system and which is adapted to execute the command data which can further comprise a sound signal, a spoken message, a video signal, a voice response system, a DTMF system, a control signal for a device such as lighting, a PTZ camera, a locking device or a production machine.

In this way the device can be utilized to allow an operator at the control room to speak to a person present at the first location, or for instance to open an entrance to a part of the first location for a supplier making a night delivery, to switch lighting on or off in such a situation or in the case of suspected trouble, or for instance to operate a machine when it has been determined, remotely or otherwise, that adjustment or switch-on or switch-off is necessary.

In addition to surveillance of objects, the communication system according to the present invention can be used to monitor persons, for instance elderly people or patients requiring care. In such a case the control room is manned by carers or the control room provides access to carers. In addition to monitoring people or locations, it is further possible using the present invention to secure data present on one of the data processing systems, such as patient files or similar person-sensitive information.

It is the case in all applications of the present invention that, in contrast to a link between a plurality of data processing systems which is based on the communication protocol, data traffic over the link not accessible via the communication protocol is made possible by physical settings of the coupling that is inaccessible via the communication protocol. It is hereby not possible for a malicious person to enter the first or second data processing system from the at least partly public communication network, or to enter the second data processing system from, or having entered, the first data processing system, or vice versa: to enter the first data processing system from, or having entered, the second data processing system, since unintended data exchange via the coupling is not possible. Unintended data exchange is particularly not possible by means of misuse, such as misuse of software errors, misuse of software settings, such as user settings.

In an embodiment of the present invention recording means at the first location generate a broadband audiovisual signal which must be carried to the control room. The control room is adapted here to enable an operator to select different cameras disposed in the space for surveillance in order to be able to track the images generated by these cameras. Operating means are further present for operating movable cameras or for remote operation of lighting or other devices, such as production machines. In addition, the operator can speak remotely to a person present at the first location, such as a driver making a delivery, from the second location by means of a two-way communication connection. The recording means are here linked to a first data processing system which is operated according to the internet protocol. The first data processing system is linked via the internet to the second data processing system situated in the control room. Situated between the first data processing system and the second data processing system are one or more protocol converters which convert(s) the recorded data according to the internet protocol into a safe format which does not allow the inclusion of unintended data. An example of a signal which has been found to be suitable is here an (analog) video signal, an (analog) audio signal or an RS-232 interface with a very specific, predefined data protocol. The protocol converter is formed here by a first sub-device which converts a video signal according to the internet protocol (a so-called streaming video signal) into an analog video signal. A device which has been found suitable for this purpose is a video streamer. The thus generated video signal is fed to a second sub-device which once again makes it into a signal which is transportable via the internet protocol and which is fed to the second data processing system at the control room via the used communication network. The second sub-device can likewise be formed by a video streamer device. In an embodiment of the present invention the second coupling comprises a second protocol converter, which can be identical to the first, for the purpose of further increasing the level of security.

In a further embodiment the operator can make a connection with the first location from the second location in order to carry out a preventive check or to carry out a virtual inspection round or to perform additional services for clients, such as for instance assisting remotely controlled night deliveries or checking and operating installations and machines.

The invention will now be elucidated with reference to the following figures, in which:
- Figure 1 shows a first embodiment of a system for exchanging data according to the present invention;
- Figure 2 shows a second embodiment of a system for exchanging data according to the present invention;
- Figure 3 shows a third embodiment of a system for exchanging data according to the present invention;
- Figure 4 shows a fourth embodiment of a system for exchanging data according to the present invention;
- Figure 5 shows a fifth embodiment of a system for exchanging data according to the present invention.

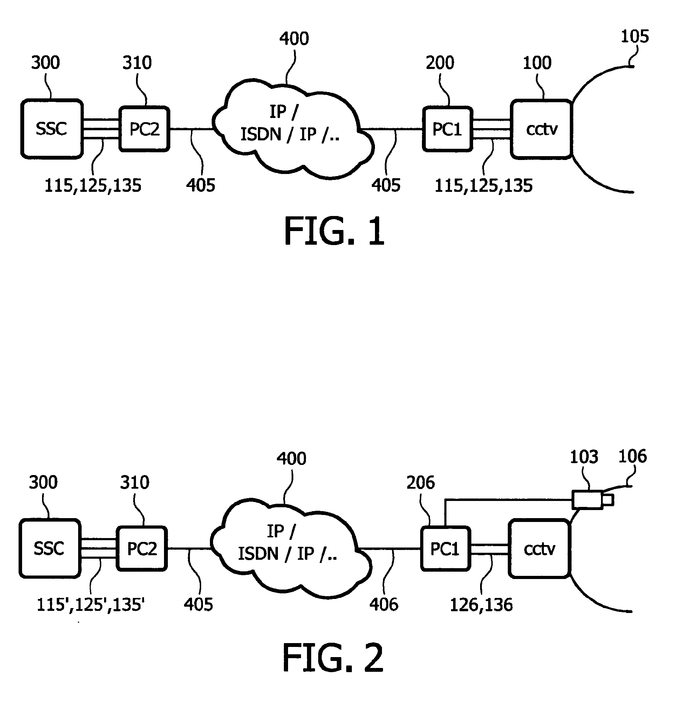

Figure 1 shows a first embodiment of the present invention, wherein a number of sensors from the group of alarm dialers, audio and video recording means and display equipment is coupled at first location 105 to a data processing system formed by closed-circuit television system (CCTV) 100. The closed-circuit television system 100 is in data-communicating connection with a first protocol converter 200. Video data 115, audio data 125 or control data 135 or combinations thereof can be fed to protocol converter 200 via the connection so as to be converted by protocol converter 200 to data 405 according to the internet protocol or similar network communication protocol, These data 405 are transmitted by protocol converter 200 to the communication network 400 at least partly accessible to the public. Via the communication network 400 at least partly accessible to the public the data 405 according to the internet protocol are forwarded to a first control room 300, which is linked via a second protocol converter 310 to the communication network 400 at least partly accessible to the public. The second protocol converter converts the data 405 according to the internet protocol into video data 115', audio data 125' and control data 135', which are forwarded to first control room 300.

Figure 2 shows a subsequent embodiment of the present invention, wherein a number of sensors from the group of alarm dialers, audio and video recording means and display equipment is coupled at first location 106 to a data processing system formed by closed-circuit television system 100. The closed-circuit television system 100 is in data-communicating connection with a first protocol converter 206. Audio data 126 or control data 136 or combinations thereof can be fed to protocol converter 206 via the connection. Also linked to protocol converter 200 is video camera 103, which provides video data 116 to protocol converter 206. Protocol converter 206 converts video data 116, audio data 126 and control data 136 to data 406 according to the internet protocol. These data 406 according to the internet protocol are transmitted by protocol converter 206 to the communication network 400 at least partly accessible to the public. Via the communication network 400 at least partly accessible to the public the data 406 according to the internet protocol are forwarded to the first control room 300, which is linked via a second protocol converter 310 to the communication network 400 at least partly accessible to the public. The second protocol converter converts data 405 according to the internet protocol to video data 115', audio data 125' and control data 135', which are forwarded to the first control room 300.

The embodiment shown in figure 2 has the advantage that protocol converter 206 is provided with per se known means for communicating with video camera 103. Protocol converter 206 can for instance be formed here by a video streamer which is able to control video camera 103 via for instance Pan Tilt Zoom (PTZ) signals. As a result this embodiment can be applied particularly advantageously in situations where an existing closed-circuit television system is present at a location, which existing system may not be removed or replaced. Reasons for this may be previously granted approval or security certificates, or recently made investments for such a closed-circuit television system. The present invention makes it possible, on the basis of an already existing system, to provide a security system with less chance of a data processing system being hacked, wherein an improved image quality or image transmission speed can also be achieved by linking existing camera 103 directly to protocol converter 206.

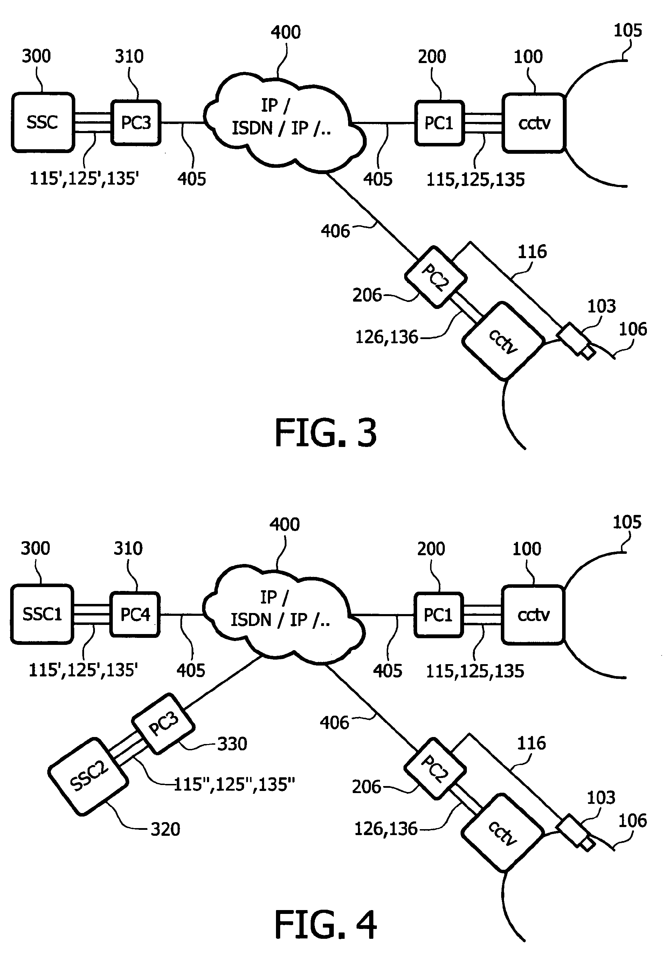

Figure 3 shows a third embodiment of the present invention, wherein both the closed-circuit television systems 100,105,106 disposed at first location 105 of figure 1 and at first location 106 of figure 2 are linked via the respective protocol converters 200 and 206 to the communication network 400 at least partly accessible to the public. Such an embodiment can be applied particularly when a plurality of locations must be monitored from one control room. Data traffic cannot take place between the locations for surveillance in any way via the internet protocol, since each of the locations is coupled to the communication network 400 at least partly accessible to the public via a protocol converter which is inaccessible to the internet protocol.

Figure 4 shows a fourth embodiment of the present invention, wherein a second control room 320 is linked via a third protocol converter 330 to the communication network 400 at least partly accessible to the public so that data 405 according to the internet protocol are forwarded to the second control room 320, which is linked via a third protocol converter 330 to the communication network 400 at least partly accessible to the public.

A connection can be made simultaneously here with two control rooms 300, 320. The second protocol converter 310 converts the data 405 according to the internet protocol to video data 115', audio data 125' or control data 135', which are transmitted to the first control room 300. The third protocol converter 330 converts the data 405 according to the internet protocol to video data 115", audio data 125" or control data 135", which are transmitted to the second control room 320.

Such an embodiment provides the advantage that, in addition to multiple locations for safeguarding, multiple control rooms are also present, wherein it is possible to reroute an existing communication connection from a first control room to a second control room. Such an embodiment can for instance provide a backup provision for the first control room. It can also be used when different control rooms have different powers. A first control room can here be authorized to detect and deal with bank robberies, while a second control room can for instance be authorized to deal with hostage situations.

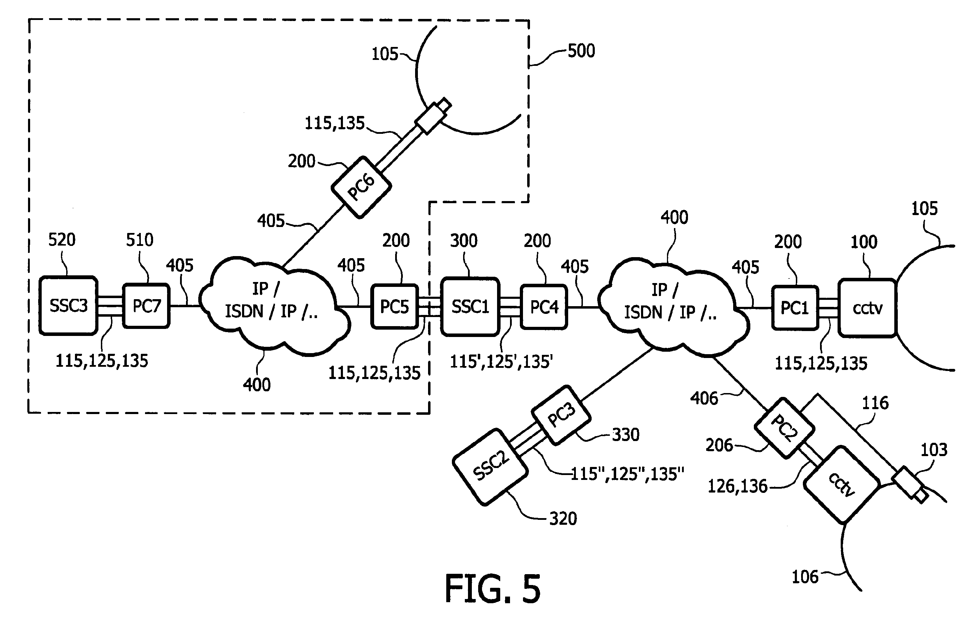

Figure 5 shows yet another embodiment of the present invention. This embodiment comprises the embodiment of figure 4, which is coupled to a similar embodiment 500. Such a coupling provides the advantage that for instance a video signal, which is generated by closed-circuit television system 100 and received by a first control room 300, can be forwarded to a further control room 520 linked via a protocol converter 510 to the communication network 400 at least partly accessible to the public, which is shown twice in the drawing for the sake of clarity. The first control room 300 can here be a control room of a private security firm, while the second control room 520 can be that of an official body such as the police. In this way the functionality of "external rerouting" is provided, and unintended data exchange via this inaccessible coupling is made even more difficult.

In addition to the shown embodiments, the present invention has many other variations which are all covered by the following claims.

## Claims

1. Communication system for exchanging data,
between
- a first communication network, with at least a first data processing system, adapted to communicate via the internet protocol;
and
- a second communication network, with at least a second data processing system, adapted to communicate according to the internet protocol;
via:
a third communication network at least partly accessible to the public,
wherein:
- the first data processing system is linked via a first coupling to the third communication network; and
- the second data processing system is linked via a second coupling to the third communication network;
**characterised in that**
- at least one of the couplings comprises a video connection inaccessible to data traffic according to the internet protocol, wherein
- said one of the couplings further comprises:
- a first video streamer adapted to convert a video signal according to the internet protocol into an (analog) video signal; and
- a second video streamer adapted to convert the (analog) video signal into a signal which is transportable via the internet protocol.

2. Communication system as claimed in claim 1, **characterized in that** the third communication network at least partly accessible to the public is a communication network from the group of:
- an IP-based fixed communication network such as the internet, intranet, extranet, LAN, WAN, VPN, HFC, cable or X-DSL;
- an IP-based wireless communication network, including GPRS, W-LAN, WIMAX, EDGE, UMTS or satellite;
- a GSM, GSMdata, HSCSD;
- an ISDN;
- a PSTN.

3. Communication system as claimed in any of the foregoing claims, **characterized in that** at least one of the couplings comprises at least one of:
- an analog data connection;
- a digital data connection.

4. Communication system as claimed in any of the foregoing claims, **characterized in that**
- the first data processing system is coupled to recording means for providing recorded data of a first location;
- the first data processing system is adapted to transmit the recorded data according to the used communication protocol to the second data processing system via the third communication network;
- the second data processing system is at least adapted to reproduce the recorded data to an observer at a second location.

5. Communication system as claimed in claim 4, **characterized in that** the recording means for providing recorded data comprise means from the group of:
- a video recording or reproducing system such as a camera, a DVS (digital video streamer), a DVR (digital video recorder) or a CCTV system;
- an audio recording or reproducing system such as a microphone or a loudspeaker;
- a data recording or reproducing system such as a motion or contact sensor, a breakage detector, a switch, a fire detector, a license plate or a face recognition system, or a video motion detector.

6. Communication system as claimed in claim 4 or 5, wherein
- the second data processing system is adapted to receive commands from the observer;
- the second data processing system is adapted to convert received commands to data in data formats suitable according to the used communication protocol;
- the second data processing system is adapted to transmit command data according to the used communication protocol to the first data processing system;
- the first data processing system is adapted to receive the command data;
- the first data processing system is adapted to forward the command data to a device which is coupled to the first data processing system and which is adapted to execute the command data.

7. Communication system as claimed in claim 8, wherein the command data are chosen from the group of:
- a sound signal;
- a spoken message;
- a video signal;
- a voice response system,
- a DTMF system,
- a control signal for a device such as lighting, a PTZ camera, a locking device or a production machine.

8. Method for exchanging data,
between
- a first communication network, with at least a first data processing system, adapted to communicate via the internet protocol;
and
- a second communication network, with at least a second data processing system, adapted to communicate according to the internet protocol;
via:
a third communication network at least partly accessible to the public,
wherein:
- the first data processing system is linked via a first coupling to the third communication network; and
- the second data processing system is linked via a second coupling to the third communication network;
**characterised in that**
- at least one of the couplings comprises a video connection inaccessible to data traffic according to the internet protocol,
comprising the steps of:
- converting by a first video streamer comprised in said one of the couplings a video signal according to the internet protocol into an (analog) video signal; and
- converting by a second video streamer comprised in said one of the couplings the (analog) video signal into a signal which is transportable via the internet protocol.

## Patentansprüche

1. Kommunikationssystem für den Datenaustausch zwischen
- einem ersten Kommunikationsnetz mit zumindest einem ersten Datenverarbeitungssystem, das für die Kommunikation über das Internetprotokoll ausgelegt ist, und
- ein zweites Kommunikationsnetz mit zumindest einem zweiten Datenverarbeitungssystem, das für die Kommunikation entsprechend dem Internetprotokoll ausgelegt ist; über:
ein drittes Kommunikationsnetz, das zumindest teilweise öffentlich zugänglich ist,
worin:
- das erste Datenverarbeitungssystem über eine erste Verknüpfung mit dem dritten Kommunikationsnetz verbunden ist; und
- das zweite Datenverarbeitungssystem über eine zweite Verknüpfung mit dem dritten Kommunikationsnetz verbunden ist;
**dadurch gekennzeichnet, dass**
- zumindest eine der Verknüpfungen eine Videoverbindung umfasst, die für den Datenverkehr entsprechend dem Internetprotokoll unzugänglich ist, worin besagte eine der Verknüpfungen ferner umfasst:
- einen ersten Videostreamer, der ausgelegt ist, ein Videosignal entsprechend dem Internetprotokoll in ein (analoges) Videosignal umzusetzen; und
- einen zweiten Videostreamer, der ausgelegt ist, das (analoge) Videosignal in ein Signal umzusetzen, das über das Internetprotokoll transportiert werden kann.

2. Kommunikationssystem nach Anspruch 1, **dadurch gekennzeichnet, dass** das dritte Kommunikationsnetz, das zumindest teilweise öffentlich zugänglich ist, ein Kommunikationsnetz ist aus der Gruppe:
- ein IP-basierendes festes Kommunikationsnetz, wie das Internet, Intranet, Extranet, LAN, WAN, VPN, HFC, Kabel oder X-DSL;
- ein IP-basierendes drahtloses Kommunikationsnetz, einschließlich GPRS, W-LAN, WIMAX, EDGE, UMTS oder Satellit;
- ein GSM, GSM-Data, HSCSD;
- ein ISDN;
- ein PSTN.

3. Kommunikationssystem nach einem der vorhergehenden Ansprüche, **dadurch gekennzeichnet, dass** zumindest eine der Verknüpfungen zumindest eine der Datenverbindungen umfasst:
- eine analoge Datenverbindung;
- eine digitale Datenverbindung.

4. Kommunikationssystem nach einem der vorhergehenden Ansprüche, **dadurch gekennzeichnet, dass**
- das erste Datenverarbeitungssystem mit Aufzeichnungsmitteln zum Bereitstellen von Aufzeichnungsdaten des ersten Standorts verknüpft ist,
- das erste Datenverarbeitungssystem für die Übermittlung der Aufzeichnungsdaten entsprechend dem verwendeten Kommunikationsprotokoll zum zweiten Datenverarbeitungssystem über das dritte Kommunikationsnetz ausgelegt ist;
- das zweite Datenverarbeitungssystem zumindest für die Wiedergabe der Aufzeichnungsdaten an einen Betrachter an einem zweiten Standort ausgelegt ist.

5. Kommunikationssystem nach Anspruch 4, **dadurch gekennzeichnet, dass** die Aufzeichnungsmittel zum Bereitstellen von Aufzeichnungsdaten Mittel umfassen aus der Gruppe:
- ein Videoaufzeichnungs- oder Wiedergabesystem, wie eine Kamera, einen DVS (Digitaler Video Streamer), einen DVR (Digitalen Video Rekorder) oder ein CCTV-System;
- ein Audioaufzeichnungs- oder Wiedergabesystem, wie ein Mikrofon oder ein Lautsprecher;
- ein Datenaufzeichnungs- oder Wiedergabesystem, wie ein Bewegungsmelder oder Kontaktgeber, ein Glasbruchmelder, ein Schalter, ein Brandmelder, ein Kennzeichenerkennung- oder Gesichtserkennungssystem oder ein Video-Bewegungsdetektor.

6. Kommunikationssystem nach Anspruch 4 oder 5, worin
- das zweite Datenverarbeitungssystem für den Empfang von Befehlen vom Beobachter ausgelegt ist;
- das zweite Datenverarbeitungssystem ausgelegt ist zum Konvertieren empfangener Befehle in Daten in Datenformate, die entsprechend dem verwendeten Kommunikationsprotokoll geeignet sind;
- das zweite Datenverarbeitungssystem für die Übermittlung von Befehlsdaten entsprechend dem verwendeten Kommunikationsprotokoll zu dem ersten Datenverarbeitungssystem ausgelegt ist;
- das erste Datenverarbeitungssystem für den Empfang von Befehlsdaten ausgelegt ist;
- das erste Datenverarbeitungssystem für die Weiterleitung der Befehlsdaten zu einer Vorrichtung, die mit dem ersten Datenverarbeitungssystem verknüpft ist und die zur Ausführung der Befehlsdaten ausgelegt ist.

7. Kommunikationssystem nach Anspruch 8, worin die Befehlsdaten aus einer der folgenden Gruppen ausgewählt werden:
- ein Tonsignal;
- eine Sprachnachricht;
- ein Videosignal;
- ein Sprachantwortsystem;
- ein DTMF-System;
- ein Steuersignal für eine Vorrichtung, wie Beleuchtung, eine PTZ-Kamera, eine Sperrvorrichtung oder eine Fertigungsmaschine.

8. Verfahren zum Datenaustausch, zwischen
- einem ersten Kommunikationsnetz mit zumindest einem ersten Datenverarbeitungssystem, das für die Kommunikation über das Internetprotokoll ausgelegt ist; und
- ein zweites Kommunikationsnetz mit zumindest einem zweiten Datenverarbeitungssystem, das für die Kommunikation entsprechend dem Internetprotokoll ausgelegt ist;
über:
ein drittes Kommunikationsnetz, das zumindest teilweise öffentlich zugänglich ist,
worin:
- das erste Datenverarbeitungssystem über eine erste Verknüpfung mit dem dritten Kommunikationsnetz verbunden ist; und
- das zweite Datenverarbeitungssystem über eine zweite Verknüpfung mit dem dritten Kommunikationsnetz verbunden ist;
**dadurch gekennzeichnet, dass**
- zumindest eine der Verknüpfungen eine Videoverbindung umfasst, die für den Datenverkehr entsprechend dem Internetprotokoll unzugänglich ist,
das die folgenden Schritte umfasst:
- Umwandlung eines Videosignals durch einen ersten Videostreamer, der in einer der besagten Verknüpfungen enthalten ist, entsprechend dem Internetprotokoll in ein (analoges) Videosignal; und
- Umwandlung des (analogen) Videosignals durch einen zweiten Videostreamer, der in einer der besagten Verknüpfungen enthalten ist, in ein über das Internetprotokoll transportables Signal.

## Revendications

1. Système de communication pour échanger des données :
entre
- un premier réseau de communication, comportant au moins un premier système de traitement de données adapté pour communiquer au moyen du protocole Internet,
et
- un second réseau de communication, comportant au moins un second système de traitement de données, adapté pour communiquer selon le protocole Internet,
par l'intermédiaire
d'un troisième réseau de communication au moins partiellement accessible au public,
étant entendu :
- que le premier système de traitement de données est relié par un premier couplage au troisième réseau de communication, et
- que le second système de traitement de données est relié par un second couplage au troisième réseau de communication,
**caractérisé en ce que** :
- au moins l'un des couplages comprend une connexion vidéo inaccessible au trafic de données selon le protocole Internet, étant entendu que ledit l'un des couplages comprend par ailleurs :
- un premier lecteur vidéo en flux continu adapté pour convertir un signal vidéo selon le protocole Internet en un signal vidéo (analogique), et
- un second lecteur vidéo en flux continu adapté pour convertir le signal vidéo (analogique) en un signal qui est transportable au moyen du protocole Internet.

2. Système de communication selon la revendication 1, **caractérisé en ce que** le troisième réseau de communication au moins partiellement accessible au public est un réseau de communication du groupe comprenant :
- un réseau de communication fixe basé sur IP tel qu'Internet, intranet, extranet, LAN, WAN, RPV, fibre coaxiale hybride (HFC), câble ou X-DSL ;
- un réseau de communication sans fil basé sur IP, dont le GPRS, le W-LAN, le WIMAX, l'EDGE, l'UMTS ou le satellite ;
- un GSM, GSMdata, HSCSD ;
- un RNIS ;
- un RTPC.

3. Système de communication selon l'une quelconque des revendications précédentes, **caractérisé en ce qu'**au moins l'un des couplages comprend au moins une connexion du groupe comprenant :
- une connexion de données analogiques ;
- une connexion de données numériques.

4. Système de communication selon l'une quelconque des revendications précédentes, **caractérisé :**
- **en ce que** le premier système de traitement de données est couplé à des moyens d'enregistrement pour fournir des données enregistrées en un premier endroit ;
- **en ce que** le premier système de traitement de données est adapté pour transmettre les données enregistrées selon le protocole de communication utilisé au second système de traitement de données par l'intermédiaire du troisième réseau de communication ;
- **en ce que** le second système de traitement de données est au moins adapté pour reproduire les données enregistrées pour un observateur en un second endroit.

5. Système de communication selon la revendication 4, **caractérisé en ce que** les moyens d'enregistrement destinés à fournir des données enregistrées est constitué de moyens du groupe comprenant :
- un système d'enregistrement ou de reproduction vidéo tel qu'une caméra, un VDS (lecteur vidéo en flux continu numérique), un DVR (magnétoscope numérique) ou un système de télévision en circuit fermé (CCTV) ;
- un système d'enregistrement ou de reproduction audio tel qu'un microphone ou un haut-parleur ;
- un système d'enregistrement ou de reproduction de données tel qu'un détecteur de mouvement ou de contact, un détecteur de rupture, un interrupteur, un détecteur d'incendie, un système de reconnaissance de plaques d'immatriculation ou de visages, ou un détecteur vidéo de mouvement.

6. Système de communication selon la revendication 4 ou 5, dans lequel :
- le second système de traitement de données est adapté pour recevoir des commandes de l'observateur ;
- le second système de traitement de données est adapté pour convertir les commandes reçues en données dans des formats de données appropriés selon le protocole de communication utilisé ;
- le second système de traitement de données est adapté pour transmettre les données des commandes selon le protocole de communication utilisé au premier système de traitement de données ;
- le premier système de traitement de données est adapté pour recevoir les données des commandes ;
- le premier système de traitement de données est adapté pour transférer les données des commandes à un dispositif qui est couplé au premier système de traitement de données et qui est adapté pour exécuter les données des commandes.

7. Système de communication selon la revendication 6, dans lequel les données des commandes sont choisies dans le groupe comprenant :
- un signal sonore ;
- un message oral ;
- un signal vidéo ;
- un système de sortie vocale ;
- un système multifréquence en code 2 (DTMF) ;
- un signal de commande destiné à un dispositif tel que l'éclairage, une caméra PTZ, un dispositif de verrouillage ou une machine de production.

8. Procédé pour échanger des données,
entre
- un premier réseau de communication, comportant au moins un premier système de traitement de données adapté pour communiquer au moyen du protocole Internet,
et
- un second réseau de communication, comportant au moins un second système de traitement de données, adapté pour communiquer selon le protocole Internet,
par l'intermédiaire :
d'un troisième réseau de communication au moins partiellement accessible au public,
étant entendu :
- que le premier système de traitement de données est relié par un premier couplage au troisième réseau de communication, et
- que le second système de traitement de données est relié par un second couplage au troisième réseau de communication,
**caractérisé :**
- **en ce qu'**au moins l'un des couplages comprend une connexion vidéo inaccessible au trafic de données selon le protocole Internet,
comprenant les étapes consistant :
- à convertir, au moyen d'un premier lecteur vidéo en flux continu compris dans ledit l'un des couplages, un premier signal vidéo selon le protocole Internet en un signal vidéo (analogique), et
- à convertir, au moyen d'un second lecteur vidéo en flux continu compris dans ledit l'un des couplages, le signal vidéo (analogique) en un signal qui est transportable au moyen du protocole Internet.
